# FASCICULE DE BREVET EUROPEEN

(11) **EP 3 946 793 B1**
(45) Date de publication et mention de la délivrance du brevet: **14.01.2026**
(21) Numéro de dépôt: 20713016.2
(22) Date de dépôt: 26.03.2020
(51) Int. Cl.: B23K 1/00, B21D 47/00, F02C 7/14, F02C 7/18, F28D 1/03, F28D 1/06, F28D 21/00, F28F 3/12, B64D 33/10, B23K 20/12, B64D 29/00, B23K 26/24, B23K 101/14, B23K 103/10, B64D 33/08, B23K 101/04, B23P 15/26, B21D 13/02, B21D 53/92, B32B 3/12

(54) **PROCÉDÉ DE FABRICATION D'UN ÉCHANGEUR SURFACIQUE STRUCTUREL POUR NACELLE**
HERSTELLUNGSVERFAHREN EINER FLÄCHENARTIGEN TAUSCHERSTRUKTUR FÜR EINEN FLUGZEUGRUMPF
MANUFACTURING METHOD OF SURFACE EXCHANGER STRUCTURE FOR AIRCRAFT NACELLE

(30) Priorité: 03.04.2019 FR 1903546
(43) Date de publication de la demande: 09.02.2022
(73) Titulaire: Safran Nacelles, 76700 Gonfreville-l'Orcher (FR)
(72) Inventeur: PEYRON, Vincent, 77550 Moissy Cramayel (FR); BOUCHOUT, Jean-Nicolas, 77550 Moissy Cramayel (FR); HUBERT-CHOINARD, Flavie, 77550 Moissy Cramayel (FR); DUGARDIN, Alexandra, 77550 Moissy Cramayel (FR)
(74) Mandataire: Germain Maureau
(86) Numéro de dépôt international: PCT/EP2020/058630
(87) Numéro de publication internationale: WO 2020/201033

(56) Documents cités:
- EP-A2- 0 797 064
- EP-A2- 0 797 064
- WO-A1-2012/095688
- WO-A1-2012/095688
- WO-A1-2012/095688
- DE-A1- 4 140 729
- DE-A1- 4 140 729
- DE-A1- 4 140 729
- JP-A- 2000 141 066
- JP-A- 2000 141 066
- JP-A- 2000 141 066
- US-A1- 2010 006 700
- US-A1- 2010 006 700
- US-A1- 2010 006 700
- US-A1- 2016 348 987
- US-A1- 2016 348 987
- US-A1- 2016 348 987
- LIU HUIJIE ET AL: "The effect of interface defect on mechanical properties and its formation mechanism in friction stir lap welded joints of aluminum alloys", JOURNAL OF MATERIALS PROCESSING TECHNOLOGY, ELSEVIER, NL, vol. 238, 20 June 2016 (2016-06-20), pages 244 - 254, XP029700956, ISSN: 0924-0136, DOI: 10.1016/J.JMATPROTEC.2016.06.029
- RAMACHANDRAN K K ET AL: "Performance analysis of dissimilar friction stir welded aluminium alloy AA5052 and HSLA steel butt joints using response surface method", THE INTERNATIONAL JOURNAL OF ADVANCED MANUFACTURING TECHNOLOGY, SPRINGER, LONDON, vol. 86, no. 9, 27 January 2016 (2016-01-27), pages 2373 - 2392, XP036061342, ISSN: 0268-3768, [retrieved on 20160127], DOI: 10.1007/S00170-016-8337-6
- LIU HUIJIE ET AL: "The effect of interface defect on mechanical properties and its formation mechanism in friction stir lap welded joints of aluminum alloys", JOURNAL OF MATERIALS PROCESSING TECHNOLOGY, ELSEVIER, NL, vol. 238, 20 June 2016 (2016-06-20), pages 244 - 254, XP029700956, ISSN: 0924-0136, DOI: 10.1016/J.JMATPROTEC.2016.06.029
- RAMACHANDRAN K K ET AL: "Performance analysis of dissimilar friction stir welded aluminium alloy AA5052 and HSLA steel butt joints using response surface method", THE INTERNATIONAL JOURNAL OF ADVANCED MANUFACTURING TECHNOLOGY, SPRINGER, LONDON, vol. 86, no. 9, 27 January 2016 (2016-01-27), pages 2373 - 2392, XP036061342, ISSN: 0268-3768, [retrieved on 20160127], DOI: 10.1007/S00170-016-8337-6
- LIU HUIJIE ET AL: "The effect of interface defect on mechanical properties and its formation mechanism in friction stir lap welded joints of aluminum alloys", JOURNAL OF MATERIALS PROCESSING TECHNOLOGY, ELSEVIER, NL, vol. 238, 20 June 2016 (2016-06-20), pages 244 - 254, XP029700956, ISSN: 0924-0136, DOI: 10.1016/J.JMATPROTEC.2016.06.029
- RAMACHANDRAN K K ET AL: "Performance analysis of dissimilar friction stir welded aluminium alloy AA5052 and HSLA steel butt joints using response surface method", THE INTERNATIONAL JOURNAL OF ADVANCED MANUFACTURING TECHNOLOGY, SPRINGER, LONDON, vol. 86, no. 9, 27 January 2016 (2016-01-27), pages 2373 - 2392, XP036061342, ISSN: 0268-3768, [retrieved on 20160127], DOI: 10.1007/S00170-016-8337-6

## Description

La présente invention concerne un procédé de fabrication d'un échangeur surfacique structural pour nacelle, et plus précisément un procédé de fabrication d'un échangeur surfacique structural présentant une forme finale réglée ou gauche (voir par exemple US 2010/006700 A1).

Par forme réglée ou gauche, on entend une forme non plane.

Plus particulièrement, une forme gauche est une forme non développable.

Un aéronef est propulsé par un ou plusieurs ensembles propulsifs comprenant chacun un moteur logé dans une nacelle tubulaire. Chaque ensemble propulsif est rattaché à l'aéronef par un mât situé généralement sous ou sur une aile ou au niveau du fuselage de l'aéronef.

Un moteur peut également être appelé turboréacteur. Dans la suite de la description, les termes moteur et turboréacteur seront utilisés indifféremment.

Une nacelle présente généralement une structure tubulaire comprenant une section amont comprenant une entrée d'air en amont du turboréacteur, une section médiane destinée à entourer une soufflante du turboréacteur, une section aval pouvant abriter des moyens d'inversion de poussée et destinée à entourer la chambre de combustion du turboréacteur, et est généralement terminée par une tuyère d'éjection dont la sortie est située en aval du turboréacteur.

En outre, une nacelle comprend usuellement une structure externe comprenant une partie fixe et une partie mobile (moyens d'inversion de poussée), et une structure interne fixe, dite Inner Fixed Structure (IFS), concentrique de la structure externe, au niveau de la section aval. La structure interne fixe entoure le cœur du turboréacteur en arrière de la soufflante. Ces structures externe et interne définissent une veine annulaire d'écoulement, encore appelé veine secondaire, visant à canaliser un flux d'air froid, dit secondaire, qui circule à l'extérieur du turboréacteur.

La structure externe comporte un carénage externe définissant une surface aérodynamique externe, et un carénage interne définissant une surface aérodynamique interne, les carénages interne et externe étant reliés en amont par une paroi de bord d'attaque formant la lèvre d'entrée d'air.

La structure tubulaire d'une nacelle présente des portions présentant des surfaces réglées, telles que les surfaces entourant la veine secondaire, et des portions présentant des surfaces gauches, telles que le carénage externe de la structure externe de la nacelle sauf éventuellement le bord de fuite.

De manière générale, le turboréacteur comprend un ensemble de pales (compresseur et éventuellement soufflante ou hélice non carénée) entraînées en rotation par un générateur de gaz à travers un ensemble de moyens de transmission.

Un système de distribution de lubrifiant est prévu pour assurer une bonne lubrification de ces moyens de transmission et les refroidir. Le lubrifiant est de l'huile. Dans la suite de la description, on emploiera indifféremment les termes lubrifiant et huile.

Un système de refroidissement comportant au moins un échangeur de chaleur permet de refroidir le lubrifiant.

Il existe des systèmes de refroidissement de lubrifiant comportant un premier échangeur surfacique entre un fluide caloporteur et le lubrifiant, et un deuxième échangeur surfacique entre le fluide caloporteur et de l'air. Un tel système de refroidissement comporte un conduit de circulation de fluide caloporteur en circuit fermé. Plus particulièrement, le conduit de circulation du fluide caloporteur comporte une portion disposée dans la nacelle au contact du carénage interne et/ou externe de la nacelle. Encore plus particulièrement, la portion disposée dans la nacelle au contact du carénage interne et/ou externe de la nacelle comporte une pluralité de canaux disposés en parallèle, lesdits canaux étant formés par une double paroi du carénage interne et/ou externe, on parle alors d'échangeur surfacique structural.

Un échangeur surfacique structural participe aux fonctions mécaniques de la nacelle. En outre, il contribue au passage des efforts, y compris lors de l'échange de chaleur.

De manière connue, les canaux formés par une double paroi du carénage interne et/ou externe sont fabriqués par un procédé d'assemblage par rivets d'une peau présentant des ondulations sur une peau dite lisse ou aérodynamique, lesdites peaux formant alors la double paroi du carénage interne et/ou externe.

Un tel procédé présente les inconvénients de diminuer l'aérodynamisme du carénage interne et/ou externe à cause de la présence de rivets.

Il est donc nécessaire de fournir un procédé de fabrication d'un échangeur surfacique structural présentant une forme finale réglée ou gauche particulièrement adapté à la fabrication de nacelles, n'ayant pas ou peu d'impact sur les performances aérodynamiques des nacelles, et dont la masse est optimisée.

A cet effet, le procédé selon l'invention est un procédé de fabrication d'un échangeur surfacique structural de forme finale réglée ou gauche pour une nacelle d'un aéronef selon la revendication 1.

La deuxième peau lisse est destinée à être au contact d'un flux d'air. Elle permet de maximiser l'écoulement du flux d'air. On parle également de peau aérodynamique. De cette façon, l'échangeur ne génère pas de perte aérodynamique, contrairement à un échangeur à ailettes.

Selon d'autres caractéristiques de l'invention, le procédé de l'invention comporte l'une ou plusieurs des caractéristiques optionnelles suivantes considérées seules ou selon toutes les combinaisons possibles.

Selon une option de l'invention le procédé comporte une étape de formage de cavités dans la première ou la deuxième peau, pour obtenir des distributeurs et collecteurs de fluide lors de l'assemblage des première et deuxième peaux, ladite étape de formage étant réalisée de préférence sous presse.

En variante, l'étape de formage de cavités dans la première ou la deuxième peau est réalisée par usinage dans la masse de la première ou deuxième peau.

Un distributeur de fluide est une cavité permettant de distribuer le fluide en entrée des canaux.

Un collecteur de fluide est une cavité permettant de recueillir le fluide en sortie des canaux.

Selon une caractéristique, l'étape d'assemblage des première et deuxième peaux est réalisée par brasage, de préférence selon les paramètres suivants :
- Application d'un feuillard métallique présentant une température de fusion de l'ordre de 450°C à 600°C sur les zones de contact entre les deux peaux,
- Application d'une pression de contact entre les deux peaux de l'ordre de 50 à 350 g/cm², et
- Application d'un traitement thermique de l'ordre de 2h à 20h à une température de l'ordre de 120 à 220°C, de sorte à obtenir un état T6.

Par état T6 on entend un état de vieillissement adapté pour obtenir les résistances mécaniques optimales de l'assemblage, notamment dans le cas où les première et deuxième peaux sont en aluminium.

Le feuillard métallique est également nommé métal d'apport ou brasure. Le feuillard métallique est de préférence un alliage ou une tôle cladée.

Selon une caractéristique, l'étape d'assemblage des première et deuxième peaux est réalisée par soudage laser de préférence selon les paramètres suivants :
- Puissance du laser de l'ordre de 2000 à 4000 W,
- Vitesse d'avance du laser de l'ordre de 2 à 5 m/min,
- Distance focale entre le laser et la première ou la deuxième peau de l'ordre de 300 à 500 mm,
- Inclinaison du laser de l'ordre de 3 à 7° par rapport aux première et deuxième peaux,
- Sens du soudage en poussant la matière.

Par « sens du soudage en poussant la matière » on entend que le laser est poussé lors de son déplacement, par opposition à un sens du soudage en tirant la matière pour lequel le laser serait tiré lors de son déplacement.

Selon une caractéristique, le soudage laser est réalisé sous protection gazeuse, telle que sous protection d'argon et/ou d'hélium.

Selon une caractéristique, le soudage laser est réalisé avec un métal d'apport.

En variante, le soudage laser est réalisé sans métal d'apport, par fusion du matériau constitutif des première et deuxième peaux.

Selon une caractéristique, l'étape d'assemblage des première et deuxième peaux est réalisée par soudage par friction malaxage de préférence selon les paramètres suivants :
- Utilisation d'un outil sensiblement cylindrique comportant un pion rétractable de diamètre de l'ordre de 2 à 5 mm et de longueur de l'ordre de 1 à 5 mm de sorte que le pion rétractable pénètre dans la première peau et dans la moitié de l'épaisseur de la deuxième peau,
- Application d'une pression de contact entre les deux peaux de l'ordre de 1 à 5 kN, grâce à un moyen de pression tel que l'outil sensiblement cylindrique,
- Bridage des deux peaux grâce à un moyen de bridage mobile,
- Vitesse rotation de l'outil de l'ordre de 500 à 1500 tr/min,
- Inclinaison de l'outil de l'ordre de 1 à 5° par rapport à un plan normal aux première et deuxième peaux, et
- Vitesse d'avance de l'outil de l'ordre de 100 à 700 mm/min.

Selon un premier mode de réalisation, le procédé comporte les étapes suivantes :
a. Formage d'une première peau pour obtenir une première peau ondulée,
b. Conformage de la première peau ondulée obtenue à l'étape a) pour obtenir une première peau ondulée de forme finale réglée ou gauche,
c. Conformage d'une deuxième peau lisse pour obtenir une deuxième peau lisse de forme finale réglée ou gauche,
d. Assemblage des première et deuxième peaux de forme finale réglée ou gauche obtenues aux étapes b) et c) pour obtenir des canaux, chaque canal étant délimité par une ondulation de la première peau et la deuxième peau lisse, de sorte à former l'échangeur surfacique structural de forme finale réglée ou gauche, dans lequel un fluide est destiné à circuler dans les canaux, et de l'air est destiné à circuler au contact de la deuxième peau lisse.

Les étapes a) et b) de formage et conformage de la première peau permettent de mettre en forme la première peau afin de réaliser des ondulations et une forme réglée ou gauche, tandis que l'étape c) de conformage de la deuxième peau permet de mettre en forme la deuxième peau pour obtenir une forme réglée ou gauche.

Ce procédé permet avantageusement de fabriquer des échangeurs surfaciques structuraux de forme finale réglée ou gauche de petite dimension, c'est-à-dire présentant un rayon de courbure inférieur à 1 m.

Selon une caractéristique, l'étape c) de conformage est réalisée par tendage.

Selon une caractéristique, l'étape b) de conformage est réalisée par tendage.

Ainsi, les étapes b) et/ou c) de conformage sont réalisées par tendage.

Selon une caractéristique, les étapes a) et b) de formage et conformage de la première peau sont réalisées simultanément, par exemple sous presse.

Selon une caractéristique, les étapes a) et b) de formage et conformage de la première peau sont réalisées successivement, l'étape a) de formage étant réalisée par exemple sous presse et l'étape b) de conformage étant réalisée par exemple par tendage.

Selon une caractéristique, l'étape d'assemblage des première et deuxième peaux est réalisée par brasage, de préférence selon les paramètres suivants :
- Application d'un feuillard métallique présentant une température de fusion de l'ordre de 450°C à 600°C sur les zones de contact entre les deux peaux,
- Application d'une pression de contact entre les deux peaux de l'ordre de 50 à 350 g/cm², et
- Application d'un traitement thermique de l'ordre de 2h à 20h à une température de l'ordre de 120 à 220°C, de sorte à obtenir un état T6.

Le feuillard métallique est également nommé métal d'apport ou brasure. Le feuillard métallique est de préférence un alliage ou une tôle cladée.

Selon une caractéristique, l'étape d'assemblage des première et deuxième peaux est réalisée par soudage laser de préférence selon les paramètres suivants :
- Puissance du laser de l'ordre de 2000 à 4000 W,
- Vitesse d'avance du laser de l'ordre de 2 à 5 m/min,
- Distance focale entre le laser et la première ou la deuxième peau de l'ordre de 300 à 500 mm,
- Inclinaison du laser de l'ordre de 3 à 7° par rapport aux première et deuxième peaux. Selon une caractéristique, le soudage laser est réalisé sous protection gazeuse, telle que sous protection d'argon et/ou d'hélium.

Selon une caractéristique, le soudage laser est réalisé avec un métal d'apport.

En variante, le soudage laser est réalisé sans métal d'apport, par fusion du matériau constitutif des première et deuxième peaux.

Selon une caractéristique, l'étape d'assemblage des première et deuxième peaux est réalisée par soudage par friction malaxage de préférence selon les paramètres suivants :
- Utilisation d'un outil sensiblement cylindrique comportant un pion rétractable de diamètre de l'ordre de 2 à 5 mm et de longueur de l'ordre de 1 à 5 mm de sorte que le pion rétractable pénètre dans la première peau et dans la moitié de l'épaisseur de la deuxième peau,
- Application d'une pression de contact entre les deux peaux de l'ordre de 1 à 5 kN, grâce à un moyen de pression tel que l'outil sensiblement cylindrique,
- Bridage des deux peaux grâce à un moyen de bridage mobile,
- Vitesse rotation de l'outil de l'ordre de 500 à 1500 tr/min,
- Inclinaison de l'outil de l'ordre de 1 à 5° par rapport à un plan normal aux première et deuxième peaux, et
- Vitesse d'avance de l'outil de l'ordre de 100 à 700 mm/min.

Selon une caractéristique, le procédé comporte une étape de formage de la deuxième peau préalablement à l'étape c) de conformage de la deuxième peau, pour obtenir une deuxième peau comportant des cavités destinées à former des distributeurs et collecteurs de fluide lors de l'assemblage des première et deuxième peaux de l'étape d), par exemple sous presse ou par usinage dans la masse de la deuxième peau.

Selon une caractéristique, l'étape de formage de la première peau de l'étape a) comporte une étape de formage de cavités destinées à former des distributeurs et collecteurs de fluide lors de l'assemblage des première et deuxième peaux de l'étape d), par exemple sous presse ou par usinage dans la masse de la première peau.

Selon une option de l'invention, le procédé comporte une étape d'assemblage de distributeurs et collecteurs de fluide sur la première peau ondulée obtenue à l'étape a), par soudage de préférence par soudage TIG.

Selon une caractéristique, le procédé comporte une étape de contrôle des étapes d'assemblage et/ou de conformage.

Selon une caractéristique, la première peau et/ou la deuxième peau est en aluminium ou en alliage comportant de l'aluminium, de préférence de série 6000. Cela permet d'améliorer la légèreté et la formabilité des peaux.

Selon une caractéristique, la première peau présente une épaisseur de l'ordre de 1 à 3 mm et la deuxième peau présente une épaisseur de l'ordre de 0,6 à 2 mm.

Selon un deuxième mode de réalisation, le procédé selon l'invention est un procédé de fabrication d'un échangeur surfacique structural de forme finale réglée ou gauche pour aéronef, comportant les étapes suivantes :
a. Formage d'une première peau pour obtenir une première peau ondulée, par exemple sous presse,
b. Assemblage de la première peau ondulée obtenue à l'étape a) sur une deuxième peau lisse pour obtenir des canaux, chaque canal étant délimité par une ondulation de la première peau et la deuxième peau lisse, de sorte à former un échangeur surfacique structural de forme intermédiaire droite,
c. Conformage de l'échangeur surfacique structural de forme intermédiaire droite obtenu à l'étape b) pour obtenir un échangeur surfacique structural de forme finale réglée ou gauche entre un fluide destiné à circuler dans les canaux, et de l'air destiné à circuler au contact de la deuxième peau lisse.

De la même manière que précédemment, la deuxième peau lisse est destinée à être au contact d'un flux d'air. Elle permet de maximiser l'écoulement du flux d'air. On parle également de peau aérodynamique.

Par forme intermédiaire droite on entend une forme sensiblement plane, par opposition à une forme réglée ou gauche.

L'étape a) de formage de la première peau permet de mettre en forme la première peau afin de réaliser des ondulations, tandis que l'étape c) de conformage de l'échangeur surfacique structural de forme intermédiaire droite obtenu à l'étape b) permet de mettre en forme l'échangeur pour obtenir une forme réglée ou gauche.

Ce procédé permet avantageusement de fabriquer des échangeurs surfaciques structuraux de forme finale réglée ou gauche de grande dimension, c'est-à-dire présentant un rayon de courbure supérieur à 1 m.

Selon une caractéristique, l'étapes c) de conformage est réalisée par tendage.

Selon une caractéristique, le procédé comporte une étape de formage de la deuxième peau préalablement à l'étape b) d'assemblage des première et deuxième peaux, pour obtenir une deuxième peau comportant des cavités destinées à former des distributeurs et collecteurs de fluide lors de l'assemblage des première et deuxième peaux de l'étape b), ladite étape de formage étant réalisée de préférence sous presse ou par usinage dans la masse de la deuxième peau.

Selon une option de l'invention, le procédé comporte une étape de formage de cavités dans la première peau, pour obtenir des distributeurs et collecteurs de fluide lors de l'assemblage des première et deuxième peaux, ladite étape de formage étant réalisée de préférence sous presse ou par usinage dans la masse de la première peau.

Selon une option de l'invention, le procédé comporte une étape d'assemblage de distributeurs et collecteurs de fluide sur la première peau ondulée obtenue à l'étape a), par soudage de préférence par soudage TIG, préalablement à l'étape b) d'assemblage des première et deuxième peaux.

Selon option de l'invention, l'étape de formage de la première peau de l'étape a) comporte une étape de formage de cavités, pour obtenir des distributeurs et collecteurs de fluide lors de l'assemblage des première et deuxième peaux, ladite étape de formage étant réalisée par exemple sous presse ou par usinage dans la masse de la première peau.

Selon une caractéristique, l'étape d'assemblage des première et deuxième peaux est réalisée par brasage, selon les paramètres suivants :
- Application d'un feuillard métallique présentant une température de fusion de l'ordre de 450°C à 600°C sur les zones de contact entre les deux peaux,
- Application d'une pression de contact entre les deux peaux de l'ordre de 50 à 350 g/cm², et
- Application d'un traitement thermique de l'ordre de 2h à 20h à une température de l'ordre de 120 à 220°C, de sorte à obtenir un état T6.

Le feuillard métallique est également nommé métal d'apport ou brasure. Le feuillard métallique est de préférence un alliage ou une tôle cladée.

Selon une caractéristique, l'étape d'assemblage des première et deuxième peaux est réalisée par soudage laser de préférence selon les paramètres suivants :
- Puissance du laser de l'ordre de 2000 à 4000 W,
- Vitesse d'avance du laser de l'ordre de 2 à 5 m/min,
- Distance focale entre le laser et la première ou la deuxième peau de l'ordre de 300 à 500 mm,
- Inclinaison du laser de l'ordre de 3 à 7° par rapport aux première et deuxième peaux,
- Sens du soudage en poussant la matière.

Selon une caractéristique, le soudage laser est réalisé sous protection gazeuse, telle que sous protection d'argon et/ou d'hélium.

Selon une caractéristique, le soudage laser est réalisé avec un métal d'apport.

En variante, le soudage laser est réalisé sans métal d'apport, par fusion du matériau constitutif des première et deuxième peaux.

Selon une caractéristique, l'étape d'assemblage des première et deuxième peaux est réalisée par soudage par friction malaxage de préférence selon les paramètres suivants :
- Utilisation d'un outil sensiblement cylindrique comportant un pion rétractable de diamètre de l'ordre de 2 à 5 mm et de longueur de l'ordre de 1 à 5 mm de sorte que le pion rétractable pénètre dans la première peau et dans la moitié de l'épaisseur de la deuxième peau,
- Application d'une pression de contact entre les deux peaux de l'ordre de 1 à 5 kN, grâce à un moyen de pression tel que l'outil sensiblement cylindrique,
- Bridage des deux peaux grâce à un moyen de bridage mobile,
- Vitesse rotation de l'outil de l'ordre de 500 à 1500 tr/min,
- Inclinaison de l'outil de l'ordre de 1 à 5° par rapport à un plan normal aux première et deuxième peaux, et
- Vitesse d'avance de l'outil de l'ordre de 100 à 700 mm/min.

Selon une caractéristique, le procédé comporte une étape de contrôle des étapes d'assemblage et/ou de conformage.

Selon une caractéristique, la première peau et/ou la deuxième peau est en aluminium ou en alliage comportant de l'aluminium, de préférence de série 6000. Cela permet d'améliorer la légèreté et la formabilité des peaux.

Selon une caractéristique, la première peau présente une épaisseur de l'ordre de 1 à 3 mm et la deuxième peau présente une épaisseur de l'ordre de 0,6 à 2 mm. L'invention concerne en outre un échangeur obtenu par le procédé tel que décrit précédemment.

Un tel échangeur est un échangeur surfacique structural pour aéronef caractérisé en ce qu'il présente une forme finale réglée ou gauche.

Selon une caractéristique, l'échangeur comporte une première peau ondulée de forme finale réglée assemblée sur une deuxième peau lisse de forme finale réglée.

Selon une autre caractéristique, l'échangeur comporte une première peau ondulée de forme finale gauche assemblée sur une deuxième peau lisse de forme finale gauche. Ainsi, l'échangeur comporte une première peau ondulée de forme finale réglée ou gauche assemblée sur une deuxième peau lisse de forme finale réglée ou gauche. D'autres caractéristiques et avantages de la présente invention apparaitront à la lecture de la description qui va suivre et à l'examen des figures annexées dans lesquelles :
[Fig. 1] est une vue schématique illustrant un procédé de fabrication d'un échangeur surfacique structural de forme finale réglée, selon une première variante
[Fig. 2] est une vue de détail de l'échangeur de la figure 1,
[Fig. 3] est une vue schématique illustrant une étape de formage d'une première peau ondulée sous presse,
[Fig. 4] est une vue schématique illustrant une étape de formage et conformage d'une première peau ondulée sous presse,
[Fig. 5] est une vue schématique illustrant un procédé de fabrication d'un échangeur surfacique structural de forme finale réglée, selon une deuxième variante
[Fig. 6] est une vue schématique illustrant une étape de conformage par tendage, appliqué à un échangeur structural de forme intermédiaire droite,
[Fig. 7A] est une vue schématique illustrant une étape d'assemblage par soudage par friction malaxage,
[Fig. 7B] est une vue schématique illustrant une étape d'assemblage par soudage laser selon une première variante,
[Fig. 7C] est une vue schématique illustrant une étape d'assemblage par soudage laser selon une deuxième variante,
[Fig. 8] est une vue schématique illustrant une première peau ondulée comportant des cavités à chacune de ses extrémités destinées à former des distributeurs et collecteurs de fluide,
[Fig. 9] est une vue schématique illustrant une variante d'une première peau ondulée comportant des cavités à chacune de ses extrémités destinées à former des distributeurs et collecteurs de fluide,
[Fig. 10] est une vue schématique partielle illustrant une variante d'une première peau ondulée comportant une cavité à une de ses extrémités, destinée à former un distributeur ou collecteur de fluide,
[Fig. 11] est une vue schématique partielle illustrant un échangeur surfacique structural comportant un collecteur,
[Fig. 12] est une vue schématique d'un échangeur obtenu par le procédé de l'invention,
[Fig. 13] est une vue schématique d'un distributeur d'un échangeur obtenu par le procédé de l'invention.

Dans la description qui va suivre et dans les revendications, des composants identiques, similaires ou analogues seront désignés par les mêmes chiffres de référence.

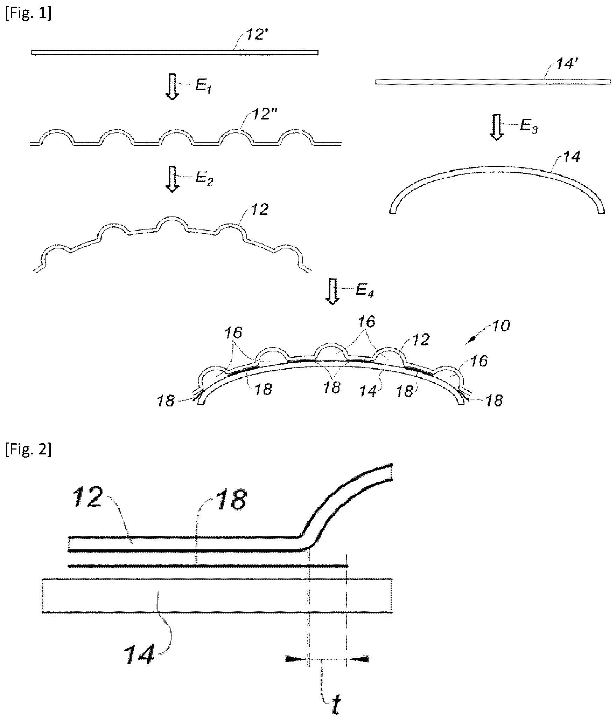

La figure 1 représente un procédé de fabrication d'un échangeur surfacique structural de forme finale réglée 10, selon une première variante du procédé.

L'échangeur 10 comporte une première peau ondulée de forme finale réglée 12 assemblée sur une deuxième peau lisse de forme finale réglée 14. Les première 12 et deuxième 14 peaux assemblées forment des canaux 16. Chaque canal 16 est délimité par une ondulation de la première peau ondulée de forme finale réglée 12 et la deuxième peau lisse de forme finale réglée 14. Ainsi, chaque canal présente une section de demi-cercle.

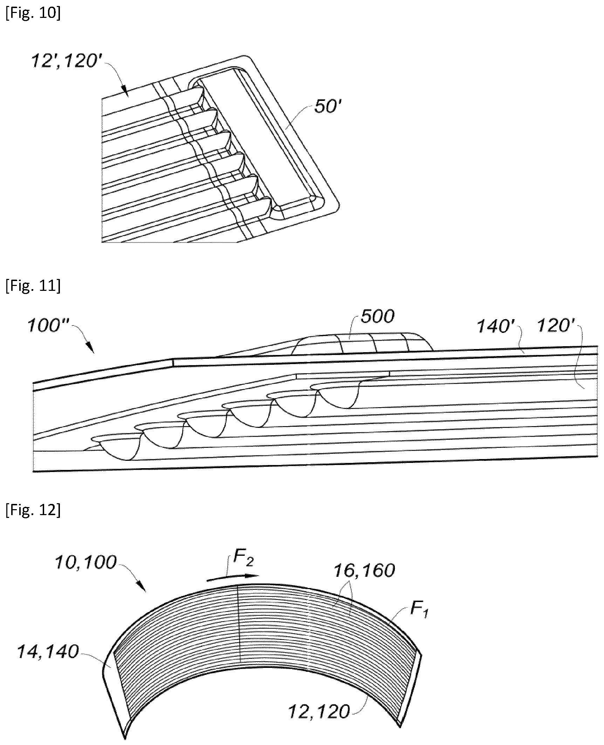

L'échangeur 10 est un échangeur thermique entre un fluide F1 (figure 12) et de l'air F2 (figure X), le fluide F1 étant destiné à circuler dans les canaux 16 et l'air F2 étant destiné à circuler au contact de la deuxième peau lisse 14.

Le procédé comporte une étape de formage E1 d'une première peau 12' sensiblement plane, permettant d'obtenir une première peau ondulée 12" dont les ondulations sont en forme de demi-cercle. Cette étape de formage E1 de la première peau 12' est suivie d'une étape de conformage E2 de la première peau ondulée 12" obtenue à l'étape de formage E1, permettant d'obtenir la première peau ondulée de forme finale réglée 12. En parallèle, une étape de conformage E3 d'une deuxième peau lisse 14' sensiblement plane permet d'obtenir la deuxième peau lisse de forme finale réglée 14.

La première peau ondulée de forme finale réglée 12 et la deuxième peau lisse de forme finale réglée 14 sont ensuite assemblées lors d'une étape d'assemblage E4 permettant d'obtenir l'échangeur surfacique structural de forme finale réglée 10.

La première peau 12' sensiblement plane est préférablement dans un état initial O, ce qui lui permet d'être malléable et de pouvoir subir l'étape de formage E1.

Un état initial O est un état recuit pour obtenir l'état avec la plus faible résistance mécanique et augmenter la ductilité du matériau constitutif des première et deuxième peaux, tel que l'aluminium.

Lors de l'étape de formage E1, la première peau 12' subit plusieurs traitements thermiques entre plusieurs étapes intermédiaires de formage, afin de retrouver avant chaque étape intermédiaire de formage un état ductile de la matière adapté à générer l'allongement de l'étape de formage suivante.

Puis la première peau subit de préférence une trempe afin de la rendre plus résistante. On parle alors d'état T4.

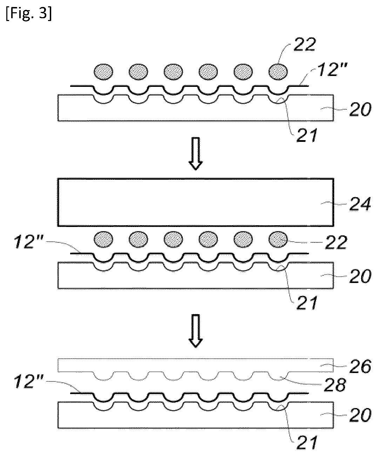

L'étape de formage E1 de la première peau 12' est réalisée sous presse, comme illustré au regard de la figure 3. Cela permet de réduire les couts.

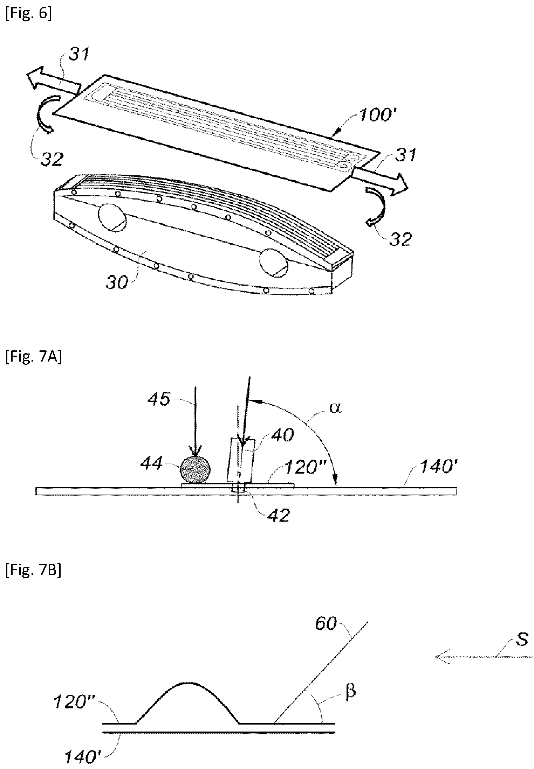

Les étapes de conformage E2 et E3 sont réalisées par tendage, comme illustré au regard de la figure 6.

Lors de l'étape de conformage E2 de la première peau 12", la première peau 12" est préférablement à l'état T4.

Lors de l'étape de conformage E3 de la deuxième peau 14', la deuxième peau 14' est préférablement à l'état T4.

L'étape d'assemblage E4 des première 12 et deuxième 14 peaux de forme finale réglée obtenues aux étapes de conformage E2 et E3 est réalisée par brasage. A cet effet, un feuillard métallique 18 est appliqué sur les zones de contact entre la première peau ondulée de forme réglée 12 et la deuxième peau lisse de forme réglée 14. Le feuillard métallique 18 présente une température de fusion de l'ordre de 500 °C. Lors du brasage, un moyen de pression (non représenté) permet d'appliquer une pression sur les zones de contact entre les deux peaux 12, 14. La pression appliquée est de l'ordre de 200 g/cm2. L'assemblage par brasage est ensuite réalisé par application de cycles de traitement thermique comportant un traitement thermique adapté pour obtenir un état final T6.

Plus particulièrement, comme l'illustre la figure 2, le feuillard métallique 18 est disposé sur les faces de contact entre les deux peaux 12, 14 avec une tolérance « t » de l'ordre de 2 mm.

Afin de faciliter l'assemblage par brasage, des goupilles (non représentées) sont disposées aux extrémités des peaux 12, 14 afin de les indexer l'une par rapport à l'autre, c'est-à-dire de les positionner l'une par rapport à l'autre.

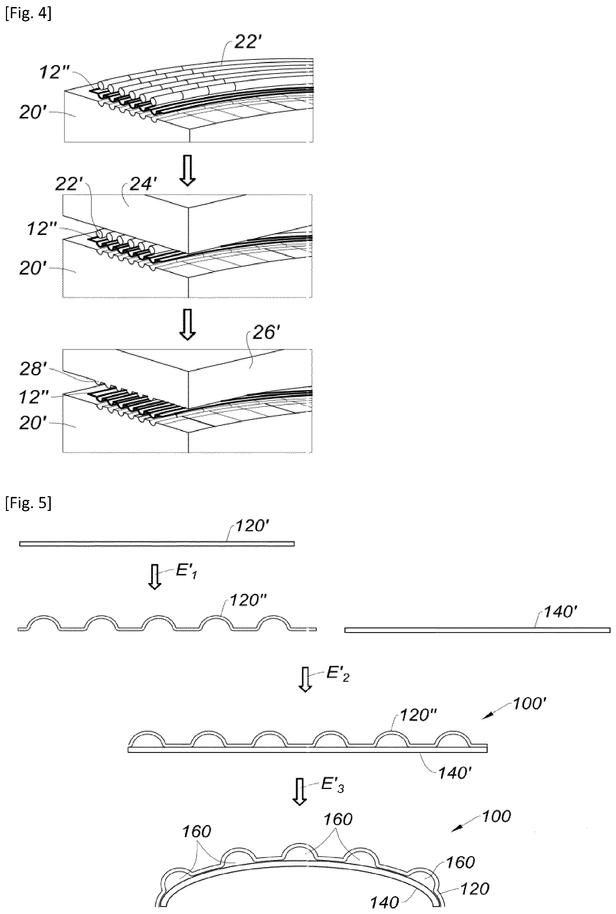

En variante, l'étape d'assemblage E4 est réalisée par soudage, tel que par soudage par friction malaxage illustré au regard de la figure 7A, ou par soudage laser illustré au regard de la figure 7B. Selon ces variantes, l'échangeur obtenu est un échangeur surfacique structural identique à l'échangeur surfacique structural 100 obtenu selon le procédé de la figure 5.

Dans une variante non représentée, l'étape de conformage E2 de la première peau 12' permet d'obtenir une première peau ondulée de forme finale gauche (non représentée), et l'étape de conformage E3 de la deuxième peau lisse 14' permet d'obtenir une deuxième peau lisse de forme finale gauche (non représentée). Selon cette variante, l'étape d'assemblage E4 des première et deuxième peaux ainsi obtenues permet d'obtenir un échangeur surfacique structural de forme finale gauche (non représenté).

Dans une variante non représentée, l'étape de formage E1 de la première peau permet d'obtenir une première peau ondulée dont les ondulations sont de forme carrée ou triangulaire. L'échangeur obtenu selon cette variante présente des canaux de section carrée ou triangulaire.

La figure 3 illustre l'étape de formage E1 de la première peau 12' (figure 1) sous presse. A cet effet, la première peau 12' sensiblement plane (figure 1) est disposée sur un moule femelle 20 présentant des empreintes 21 de section identique à la section des canaux 16 (figure 1) de l'échangeur 10 (figure 1) à fabriquer. Puis des éléments 22 en caoutchouc, de section identique à la section des canaux 16 (figure 1) de l'échangeur 10 (figure 1) à fabriquer, sont appliqués sur la première peau 12' (figure 1), de sorte à former les ondulations de la première peau ondulée 12". Puis une plaque 24 en caoutchouc est appliquée sur les éléments 22 en caoutchouc. Enfin un moule male 26, présentant des protubérances 28, de section identique à la section des canaux 16 (figure 1) de l'échangeur 10 (figure 1) à fabriquer, est appliqué sur la première peau ondulée 12" à la place des éléments 22 en caoutchouc et de la plaque 24 en caoutchouc, de façon à finaliser la formation des ondulations.

Le moule femelle 20 et le moule male 26 sont complémentaires.

La figure 4 illustre une variante du procédé de la figure 1, dans laquelle les étapes de formage E1 et de conformage E2 de la première peau sont réalisées simultanément, sous presse. A cet effet, le procédé est identique au procédé illustré au regard de la figure 3, mais le moule femelle 20', les éléments 22' en caoutchouc, la plaque 24' en caoutchouc et le moule male 26' présentent une forme réglée identique à la forme réglée de la première peau ondulée de forme réglée 12" à obtenir.

En variante, le moule femelle 20, les éléments 22 en caoutchouc, la plaque 24 en caoutchouc et le moule male 26 présentent une forme gauche identique à la forme gauche de la première peau ondulée de forme gauche à obtenir.

La figure 5 illustre un procédé de fabrication d'un échangeur surfacique structural de forme finale réglée 100, selon une variante du procédé.

L'échangeur 100 comporte une première peau ondulée de forme finale réglée 120 assemblée sur une deuxième peau lisse de forme finale réglée 140. Les première 120 et deuxième 140 peaux assemblées forment des canaux 160. Chaque canal 160 est délimité par une ondulation de la première peau ondulée de forme finale réglée 120 et la deuxième peau lisse de forme finale réglée 140. Ainsi, chaque canal présente une section de demi-cercle.

L'échangeur 100 est un échangeur thermique entre un fluide F1 (figure 12) et de l'air F2 (figure 12), le fluide F1 étant destiné à circuler dans les canaux 160 et l'air F2 étant destiné à circuler au contact de la deuxième peau lisse 140.

Le procédé comporte une étape de formage E'1 d'une première peau 120' sensiblement plane permettant d'obtenir une première peau ondulée 120". Cette étape de formage E'1 de la première peau 120' est suivie d'une étape d'assemblage E'2 de la première peau ondulée 120" sur une deuxième peau lisse 140', afin d'obtenir un échangeur surfacique structural de forme intermédiaire droite 100'. Puis une étape de conformage E'3 de l'échangeur structural de forme intermédiaire droite 100' est réalisée afin d'obtenir l'échangeur surfacique structural de forme finale réglée 100.

La première peau 120' sensiblement plane est préférablement dans un état initial O, ce qui lui permet d'être malléable et de pouvoir subir l'étape de formage E'1.

Lors de l'étape de formage E'1, la première peau 120' subit plusieurs traitements thermiques entre plusieurs étapes intermédiaires de formage, afin de retrouver avant chaque étape intermédiaire de formage un état ductile de la matière adapté à générer l'allongement de l'étape de formage suivante.

Puis la première peau subit de préférence une trempe afin de la rendre plus résistante. On parle alors d'état T4.

L'étape de formage E'1 de la première peau 120' est réalisée sous presse, comme illustré au regard de la figure 3.

L'étape d'assemblage E'2 des première 120" et deuxième 140' peaux est réalisée par soudage par friction malaxage, comme illustré au regard de la figure 7A.

En variante, cette étape est réalisée par soudage laser ou par brasage comme illustré au regard de la figure 2. Dans la variante selon laquelle l'étape d'assemblage E'2 est réalisée par brasage, on obtient un échangeur identique à l'échangeur 10 obtenu par le procédé illustré à la figure 1.

L'étape de conformage E'3 de l'échangeur structural de forme intermédiaire droite 100' est réalisée par tendage, comme illustré au regard de la figure 6.

La figure 6 illustre le procédé de conformage par tendage, appliqué à l'échangeur structural de forme intermédiaire droite 100' de la figure 5.

L'échangeur structural de forme intermédiaire droite 100' est appliqué sur un outillage 30 présentant une forme réglée identique à la forme réglée de l'échangeur 100 à obtenir, et une force 31, 32 de tendage est appliquée aux extrémités de l'échangeur 100' de façon à conformer l'échangeur 100'.

Ce procédé peut être appliqué aux étapes de conformage E2 et E3 de la figure 1.

La figure 7A illustre le procédé de soudage par friction malaxage permettant l'assemblage E'2 des première 120" et deuxième 140' peaux selon le procédé de la figure 5. A cet effet, un outil 40 sensiblement cylindrique comportant un pion 42 rétractable de longueur de l'ordre de 3 mm est appliqué au niveau des zones de contact entre la première peau ondulée 120" et la deuxième peau lisse 140', et mis en rotation selon une vitesse de l'ordre de 1000 tr/min de sorte que le pion 42 traverse la première peau ondulée 120" et pénètre dans la moitié de l'épaisseur de la deuxième peau lisse 140'.

En parallèle, un galet 44 de bridage mobile applique une pression 45 sur les zones de contact entre la première peau ondulée 120" et la deuxième peau lisse 140', de l'ordre de 3 kN.

L'outil 40 est incliné. Il s'étend selon une direction longitudinale présentant un angle α de l'ordre de 3° par rapport à la première peau ondulée 120".

L'outil 40 parcourt l'ensemble des zones de contact entre la première peau ondulée 120" et la deuxième peau lisse 140' selon une vitesse d'avance de l'ordre de 400 mm/min.

L'outil 40 peut parcourir une trajectoire curviligne grâce au galet en amont de la trajectoire curviligne.

Le galet est un moyen de pression. Il est piloté indépendamment de l'outil 40.

L'outil 40 est une tête de soudage disposé sur un robot ou portique.

Ce procédé de soudage par friction malaxage permet de ramollir les matériaux des peaux 120", 140' et de les mélanger intimement.

En variante, le pion 42 n'est pas rétractable.

La figure 7B illustre le procédé de soudage laser permettant l'assemblage E'2 des première 120" et deuxième 140' peaux selon le procédé de la figure 5. A cet effet, un laser 60 est appliqué au niveau des zones de contact entre la première peau ondulée 120" et la deuxième peau lisse 140', de manière inclinée d'un angle β de l'ordre de 5° par rapport aux première et deuxième peaux et avec une distance focale entre le laser 60 et la première peau 120" de l'ordre de 400 mm (non visible sur la figure 7B). Le laser est déplacé le long de la première peau 120" dans le sens de la flèche S. On parle de sens du soudage en poussant la matière car le laser 60 est poussé lors de son déplacement. Le laser présente une puissance de l'ordre de 3000 W. Sa vitesse d'avance est de l'ordre de 4 m/min.

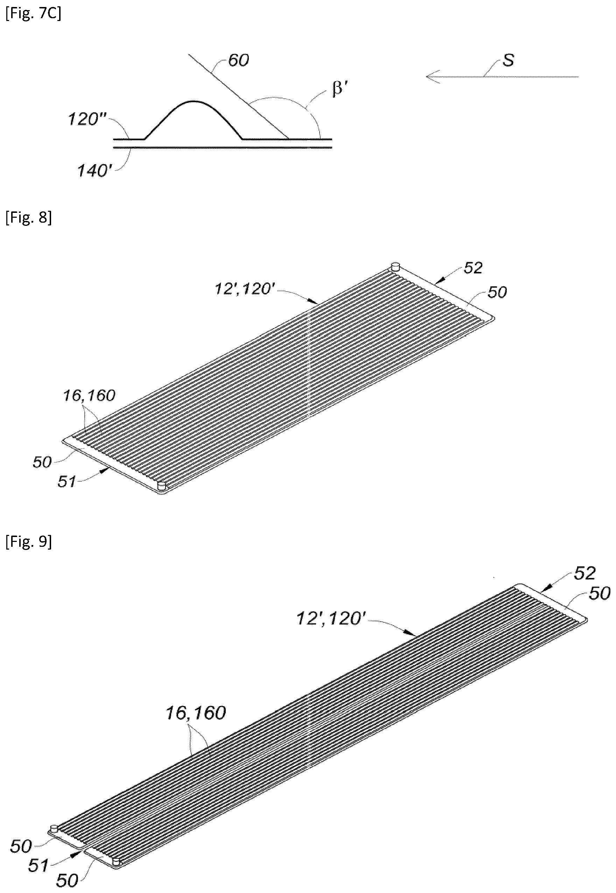

La figure 7C illustre une variante du procédé de soudage laser permettant l'assemblage E'2 des première 120" et deuxième 140' peaux selon le procédé de la figure 5. Dans cette variante, le laser 60 est incliné d'un angle β' de l'ordre de 175° par rapport aux première et deuxième peaux. Le laser est déplacé le long de la première peau 120" dans le sens de la flèche S. On parle de sens du soudage en tirant la matière car le laser 60 est tiré lors de son déplacement.

La figure 8 illustre une première peau ondulée 12', 120' comportant des cavités 50 à chacune de ses extrémités 51, 52.

Les cavités 50 sont réalisées lors de l'étape de formage E1, E'1 de la première peau 12', 120'.

Ces cavités 50 sont destinées à former respectivement un distributeur et un collecteur de fluide, lors de l'étape d'assemblage des première et deuxième peaux, permettant d'obtenir un échangeur surfacique structural comportant un distributeur et un collecteur de fluide.

La figure 9 illustre une variante d'une première peau ondulée 12', 120' comportant des cavités 50 à chacune de ses extrémités.

Dans cette variante, les cavités sont réalisées de la même manière qu'au regard de la figure 8. La première peau ondulée 12', 120' comporte plus précisément deux cavités 50 à une première extrémité 51 et une cavité à l'extrémité opposée 52. Les cavités 50 de la première extrémité 51 sont destinées à former respectivement un distributeur et un collecteur de fluide, tandis que la cavité 50 de l'extrémité opposée 52 est destinée à former un collecteur demi-tour visant à permettre une circulation de fluide entre les canaux.

La figure 10 illustre une première peau ondulée 12', 120' comportant une cavité 50' à une de ses extrémités.

La cavité 50' est assemblée par soudage sur la première peau ondulée 12', 120', préalablement à l'étape d'assemblage des deux peaux ou préalablement à l'étape de conformage de la première peau.

De la même manière que précédemment, la cavité 50' est destinée à former un distributeur ou un collecteur de fluide, lors de l'étape d'assemblage avec la deuxième peau.

La figure 11 illustre un échangeur surfacique structural 100" comportant une première peau ondulée 120" assemblée sur une deuxième peau lisse 140', un collecteur 500 de fluide étant disposé sur la deuxième peau lisse 140' à une de ses extrémités.

Selon cette variante, le procédé de la figure 5 comporte une étape de formage (non représentée) de la deuxième peau 140', préalablement à l'étape d'assemblage E'2 des peaux 120", 140', pour obtenir une deuxième peau comportant une cavité destinée à former le collecteur 500 lors de l'assemblage des deux peaux 120", 140'. Cette étape de formage est réalisée sous presse, de la même manière qu'illustré au regard de la figure 3.

La figure 12 illustre l'échangeur surfacique structural de forme réglée 10, 100 obtenu par les procédés des figures 1 ou 5.

L'échangeur 10, 100 comporte une première peau ondulée de forme réglée 12, 120 et une deuxième peau lisse de forme réglée 14, 140 qui forment des canaux 16, 160.

L'échangeur 10, 100 est étanche jusqu'à 10 bars.

Dans une variante non représentée, il comporte des distributeurs et collecteurs de fluide à l'une et/ou l'autre de ses extrémités, afin de permettre de distribuer et collecter le fluide F destiné à circuler dans les canaux 16, 160, les collecteurs et distributeurs étant obtenus selon les procédés illustrés précédemment.

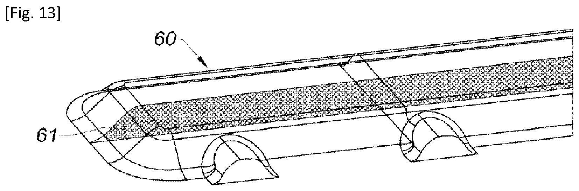

Dans une variante, l'échangeur 10, 100 comporte au moins un distributeur tel qu'illustré au regard de la figure 13.

La figure 13 illustre un exemple de distributeur 60 comportant une grille de distribution 61 permettant d'optimiser la distribution du fluide dans les canaux 16, 160 de l'échangeur 10, 100 tel qu'illustré précédemment.

Par ailleurs, dans une variante non représentée, une étape de dégraissage des première et deuxième peaux est effectuée préalablement à l'étape d'assemblage E4, E'3 des première et deuxième peaux.

## Revendications

1. Procédé de fabrication d'un échangeur surfacique structural de forme finale réglée ou gauche (10 ; 100) pour une nacelle d'un aéronef, comportant les étapes de formage (E1 ; E'1) d'une première peau pour obtenir une première peau ondulée, conformage (E2 ; E3 ; E'3) et assemblage (E4 ; E'2) par soudage ou brasage de la première peau ondulée (12', 12", 12 ; 120', 120", 120) et d'une deuxième peau lisse (14 ; 140) afin d'obtenir des canaux (16 ; 160), chaque canal étant délimité par une ondulation de la première peau et la deuxième peau lisse, de sorte à former l'échangeur surfacique structural de forme finale réglée ou gauche, dans lequel un fluide (F1) est destiné à circuler dans les canaux, et de l'air (F2) est destiné à circuler au contact de la deuxième peau lisse, le procédé comportant :
- une étape de formage de cavités (50, 500) dans la première peau simultanément à l'étape de formage (E1, E'1) de la première peau, ou dans la deuxième peau préalablement à l'étape de conformage de la deuxième peau ou d'assemblage de la première peau ondulée sur la deuxième peau, pour obtenir des distributeurs et collecteurs de fluide lors de l'assemblage des première et deuxième peaux, ladite étape de formage de cavités (50, 500) étant réalisée de préférence sous presse ou par usinage dans la masse de la première ou deuxième peau, ou
- une étape d'assemblage de cavités (50') sur la première peau ondulée, préalablement à l'étape d'assemblage de la première peau ondulée sur la deuxième peau lisse, pour former des distributeurs et collecteurs de fluide lors de l'assemblage des première et deuxième peaux, par soudage,
un distributeur de fluide étant une cavité permettant de distribuer le fluide en entrée des canaux, un collecteur de fluide étant une cavité permettant de recueillir le fluide en sortie des canaux.

2. Procédé de fabrication selon la revendication 1, dans lequel l'étape d'assemblage (E4 ; E'2) des première (12 ; 120") et deuxième (14 ; 140') peaux est réalisée par soudage par friction malaxage de préférence selon les paramètres suivants :
- Utilisation d'un outil (40) sensiblement cylindrique comportant un pion (42) rétractable de diamètre de l'ordre de 2 à 5 mm et de longueur de l'ordre de 1 à 5 mm de sorte que le pion rétractable pénètre dans la première peau (12 ; 120") et dans la moitié de l'épaisseur de la deuxième peau (14 ; 140'),
- Application d'une pression de contact entre les deux peaux de l'ordre de 1 à 5 kN, grâce à un moyen de pression tel que l'outil sensiblement cylindrique (40),
- Bridage des deux peaux grâce à un moyen de bridage mobile (44),
- Vitesse rotation de l'outil (40) de l'ordre de 500 à 1500 tr/min,
- Inclinaison de l'outil (40) de l'ordre de 1 à 5° par rapport à un plan normal aux première et deuxième peaux, et
- Vitesse d'avance de l'outil (40) de l'ordre de 100 à 700 mm/min.

3. Procédé de fabrication selon la revendication 1, dans lequel l'étape d'assemblage (E4 ; E'2) des première (12 ; 120") et deuxième (14 ; 140') peaux est réalisée par brasage, de préférence selon les paramètres suivants :
- Application d'un feuillard métallique (18) présentant une température de fusion de l'ordre de 450°C à 600°C sur les zones de contact entre les deux peaux,
- Application d'une pression de contact entre les deux peaux de l'ordre de 50 à 350 g/cm2, et,
- Application d'un traitement thermique de l'ordre de 2 à 20h à une température de l'ordre de 120 à 220°C, de sorte à obtenir un état T6.

4. Procédé de fabrication selon la revendication 1, dans lequel l'étape d'assemblage (E4 ; E'2) des première (12 ; 120") et deuxième (14 ; 140') peaux est réalisée par soudage laser de préférence selon les paramètres suivants :
- Puissance du laser de l'ordre de 2000 à 4000 W,
- Vitesse d'avance du laser de l'ordre de 2 à 5 m/min,
- Distance focale entre le laser et la première ou la deuxième peau de l'ordre de 300 à 500 mm,
- Inclinaison du laser de l'ordre de 3 à 7° par rapport aux première et deuxième peaux,
- Sens du soudage en poussant la matière.

5. Procédé de fabrication selon l'une quelconque des revendications précédentes, comportant les étapes suivantes :
a. Formage (E1) de la première peau (12') pour obtenir une première peau ondulée (12"),
b. Conformage (E2) de la première peau ondulée (12") obtenue à l'étape a) pour obtenir une première peau ondulée de forme finale réglée ou gauche (12),
c. Conformage (E3) de la deuxième peau lisse (14') pour obtenir une deuxième peau lisse de forme réglée ou gauche (14), par exemple par tendage,
d. Assemblage des première (12) et deuxième (14) peaux de forme finale réglée ou gauche obtenues aux étapes b) et c) pour obtenir des canaux (16), chaque canal étant délimité par une ondulation de la première peau et la deuxième peau lisse, de sorte à former l'échangeur surfacique structural de forme finale réglée ou gauche (10), dans lequel un fluide (F1) est destiné à circuler dans les canaux, et de l'air (F2) est destiné à circuler au contact de la deuxième peau lisse.

6. Procédé de fabrication selon la revendication précédente, dans lequel les étapes b) et/ou c) de conformage sont réalisées par tendage.

7. Procédé de fabrication selon l'une quelconque des revendications 5 à 6, dans lequel les étapes a) et b) de formage (E1) et conformage (E2) de la première peau (12', 12") sont réalisées simultanément, par exemple sous presse.

8. Procédé de fabrication selon l'une quelconque des revendications 1 à 4, comportant les étapes suivantes :
a. Formage (E'1) de la première peau (120') pour obtenir une première peau ondulée (120"), par exemple sous presse,
b. Assemblage (E'2) de la première peau ondulée (120") obtenue à l'étape a) sur la deuxième peau lisse (140') pour obtenir des canaux (160), chaque canal étant délimité par une ondulation de la première peau et la deuxième peau lisse, de sorte à former un échangeur surfacique structural de forme intermédiaire droite (100'),
c. Conformage (E'3) de l'échangeur surfacique structural de forme intermédiaire droite (100') obtenu à l'étape b) pour obtenir un échangeur surfacique structural de forme finale réglée ou gauche (100) entre un fluide (F1) destiné à circuler dans les canaux, et de l'air (F2) destiné à circuler au contact de la deuxième peau lisse.

9. Procédé de fabrication selon la revendication précédente, dans lequel l'étape c) de conformage (E'3) est réalisée par tendage.

10. Procédé de fabrication selon l'une quelconque des revendications 5 à 6 ou 9, dans lequel l'étape d'assemblage de cavités (50') sur la première peau ondulée (12", 120") est une étape d'assemblage de cavités (50') sur la première peau ondulée (12", 120") obtenue à l'étape a), préalablement à l'étape de conformage (E2) de la première peau ondulée (12") ou préalablement à l'étape d'assemblage (E'2) de la première peau ondulée (120") sur la deuxième peau lisse (140') par soudage TIG.

11. Procédé de fabrication selon l'une quelconque des revendications précédentes, comportant une étape de contrôle des étapes d'assemblage et/ou de conformage.

12. Procédé de fabrication selon l'une quelconque des revendications précédentes, dans lequel la première peau et/ou la deuxième peau est en aluminium ou en alliage comportant de l'aluminium, de préférence de série 6000.

13. Procédé de fabrication selon l'une quelconque des revendications précédentes, dans lequel la première peau présente une épaisseur de l'ordre de 1 à 3 mm et la deuxième peau présente une épaisseur de l'ordre de 0,6 à 2 mm.

## Patentansprüche

1. Verfahren zur Herstellung eines strukturellen Oberflächenwärmetauschers mit geregelter oder linker Endform (10; 100) für ein Maschinenhaus eines Luftfahrzeugs, umfassend die Schritte (E1; E'1) des Bildens einer ersten Haut, um eine erste gewellte Haut zu erhalten, Formens (E2; E3; E'3) und Zusammenfügens (E4; E'2) der ersten gewellten Haut (12', 12", 12; 120', 120", 120) und einer zweiten glatten Haut (14; 140) durch Schweißen oder Löten, um Kanäle (16; 160) zu erhalten, wobei jeder Kanal durch eine Welle der ersten Haut und die zweite glatte Haut begrenzt ist, so dass er den strukturellen Oberflächenwärmetauscher mit geregelter oder linker Endform bildet, wobei ein Fluid (F1) dazu bestimmt ist, in den Kanälen zu zirkulieren, und Luft (F2) dazu bestimmt ist, in Kontakt mit der zweiten glatten Haut zu zirkulieren, wobei das Verfahren Folgendes umfasst:
- einen Schritt des Bildens von Hohlräumen (50, 500) in der ersten Haut gleichzeitig mit dem Schritt des Bildens (E1, E'1) der ersten Haut oder in der zweiten Haut vor dem Schritt des Formens der zweiten Haut oder des Zusammenfügens der ersten gewellten Haut mit der zweiten Haut, um bei dem Zusammenfügen der ersten und der zweiten Haut Fluidverteiler und -kollektoren zu erhalten, wobei der Schritt des Bildens von Hohlräumen (50, 500) vorzugsweise durch Pressen oder Bearbeiten der Masse der ersten oder der zweiten Haut hergestellt werden, oder
- einen Schritt des Zusammenfügens von Hohlräumen (50') auf der ersten gewellten Haut, vor dem Schritt des Zusammenfügens der ersten gewellten Haut mit der zweiten glatten Haut, um bei dem Zusammenfügen der ersten und der zweiten Haut durch Schweißen Fluidverteiler und -kollektoren zu bilden, wobei ein Fluidverteiler ein Hohlraum ist, der es ermöglicht, das Fluid an dem Eingang der Kanäle zu verteilen, wobei ein Fluidkollektor ein Hohlraum ist, der es ermöglicht, das Fluid an dem Ausgang der Kanäle aufzufangen.

2. Herstellungsverfahren nach Anspruch 1, wobei der Schritt des Zusammenfügens (E4; E'2) der ersten (12; 120") und der zweiten (14; 140') Haut durch Reibrührschweißen vorzugsweise nach folgenden Parametern durchgeführt wird:
- Verwendung eines im Wesentlichen zylindrischen Werkzeugs (40) mit einem einziehbaren Stift (42) mit einem Durchmesser von 2 bis 5 mm und einer Länge von 1 bis 5 mm, so dass der einziehbare Stift in die erste Haut (12; 120") und in die Hälfte der Dicke der zweiten Haut (14; 140') eindringt,
- Anwendung eines Kontaktdrucks zwischen den beiden Häuten in der Größenordnung von 1 bis 5 kN mit einem Druckmittel wie dem im Wesentlichen zylindrischen Werkzeug (40),
- Spannen der beiden Häute durch ein bewegliches Spannmittel (44),
- Drehzahl des Werkzeugs (40) in dem Bereich von 500 bis 1500 U/min,
- Neigung des Werkzeugs (40) in dem Bereich von 1 bis 5° in Bezug auf eine Ebene, die normal zu der ersten und zweiten Haut ist, und
- Vorschubgeschwindigkeit des Werkzeugs (40) in dem Bereich von 100 bis 700 mm/min.

3. Herstellungsverfahren nach Anspruch 1, wobei der Schritt des Zusammenfügens (E4; E'2) der ersten (12; 120") und der zweiten (14; 140') Haut durch Löten vorzugsweise nach folgenden Parametern durchgeführt wird:
- Auftragen eines Metallbandes (18) mit einer Schmelztemperatur in dem Bereich von 450 °C bis 600 °C auf die Kontaktbereiche zwischen den beiden Häuten,
- Anwendung eines Kontaktdrucks zwischen den beiden Häuten in dem Bereich von 50 bis 350 g/cm2, und
- Anwendung einer Wärmebehandlung in dem Bereich von 2 bis 20 Stunden bei einer Temperatur in dem Bereich von 120 bis 220 °C, um einen T6-Zustand zu erreichen.

4. Herstellungsverfahren nach Anspruch 1, wobei der Schritt des Zusammenfügens (E4; E'2) der ersten (12; 120") und der zweiten (14; 140') Haut durch Laserschweißen vorzugsweise nach folgenden Parametern durchgeführt wird:
- Laserleistung in dem Bereich von 2000 bis 4000 W,
- Vorschubgeschwindigkeit des Lasers in dem Bereich von 2 bis 5 m/min,
- Brennweite zwischen Laser und erster oder zweiter Haut in dem Bereich von 300 bis 500 mm,
- Neigung des Lasers um 3 bis 7° in Bezug auf die erste und die zweite Haut,
- Schweißrichtung durch Schieben des Materials.

5. Herstellungsverfahren nach einem der vorhergehenden Ansprüche, umfassend die folgenden Schritte:
a. Bilden (E1) der ersten Haut (12'), um eine erste gewellte Haut (12") zu erhalten,
b. Formen (E2) der in Schritt a) erhaltenen ersten gewellten Haut (12"), um eine erste gewellte Haut mit einer geregelten oder linken Endform (12) zu erhalten,
c. Formen (E3) der zweiten glatten Haut (14'), um eine zweite glatte Haut mit geregelter oder linker Form (14) zu erhalten, beispielsweise durch Spannen,
d. Zusammenfügen der ersten (12) und der zweiten (14) Haut mit geregelter oder linker Endform, die in den Schritten b) und c) erhalten wurden, um Kanäle (16) zu erhalten, wobei jeder Kanal durch eine Welle der ersten Haut und die zweite glatte Haut begrenzt ist, so dass der strukturelle Oberflächenwärmetauscher mit der geregelten oder linken Endform (10) gebildet wird, wobei ein Fluid (F1) dazu bestimmt ist, in den Kanälen zu zirkulieren, und Luft (F2) dazu bestimmt ist, in Kontakt mit der zweiten glatten Haut zu zirkulieren.

6. Herstellungsverfahren nach dem vorhergehenden Anspruch, wobei die Schritte b) und/oder c) des Formens durch Spannen durchgeführt werden.

7. Herstellungsverfahren nach einem der Ansprüche 5 bis 6, wobei die Schritte a) und b) des Bildens (E1) und Formens (E2) der ersten Haut (12', 12") gleichzeitig, beispielsweise unter einer Presse, durchgeführt werden.

8. Herstellungsverfahren nach einem der Ansprüche 1 bis 4, umfassend die folgenden Schritte:
a. Bilden (E'1) der ersten Haut (120'), um eine erste gewellte Haut (120") zu erhalten, beispielsweise unter einer Presse,
b. Zusammenfügen (E'2) der in Schritt a) erhaltenen ersten gewellten Haut (120") auf der zweiten glatten Haut (140'), um Kanäle (160) zu erhalten, wobei jeder Kanal durch eine Welle der ersten Haut und die zweite glatte Haut begrenzt ist, so dass ein struktureller Oberflächenwärmetauscher mit gerader Zwischenform (100') gebildet wird,
c. Formen (E'3) des in Schritt b) erhaltenen strukturellen Oberflächenwärmetauschers mit gerader Zwischenform (100'), um einen strukturellen Oberflächenwärmetauscher mit geregelter oder linker Endform (100) zwischen einem Fluid (F1), das dazu bestimmt ist, in den Kanälen zu zirkulieren, und Luft (F2), die dazu bestimmt ist, in Kontakt mit der zweiten glatten Haut zu zirkulieren, zu erhalten.

9. Herstellungsverfahren nach dem vorhergehenden Anspruch, wobei der Schritt c) des Formens (E'3) durch Spannen durchgeführt wird.

10. Herstellungsverfahren nach einem der Ansprüche 5 bis 6 oder 9, wobei der Schritt des Zusammenfügens von Hohlräumen (50') auf der ersten gewellten Haut (12", 120") ein Schritt des Zusammenfügens von Hohlräumen (50') auf der ersten gewellten Haut (12", 120"), die in Schritt a) erhalten wurde, vor dem Schritt des Formens (E2) der ersten gewellten Haut (12") oder vor dem Schritt des Zusammenfügens (E'2) der ersten gewellten Haut (120") auf der zweiten glatten Haut (140') durch WIG-Schweißen ist.

11. Herstellungsverfahren nach einem der vorhergehenden Ansprüche, das einen Schritt zur Kontrolle der Montage- und/oder Formschritte umfasst.

12. Herstellungsverfahren nach einem der vorhergehenden Ansprüche, wobei die erste Haut und/oder die zweite Haut aus Aluminium oder einer Aluminium enthaltenden Legierung, vorzugsweise der Serie 6000, besteht.

13. Herstellungsverfahren nach einem der vorhergehenden Ansprüche, wobei die erste Haut eine Dicke von 1 bis 3 mm aufweist und die zweite Haut eine Dicke von 0,6 bis 2 mm aufweist.

## Claims

1. A method for manufacturing a structural surface heat exchanger of a ruled or skew final shape (10; 100) for an aircraft nacelle, including steps of forming (E1; E'1) a first skin to obtain a first corrugated skin, shaping (E2; E3; E'3) and assembling (E4; E'2) by welding or brazing the first corrugated skin (12', 12", 12; 120', 120", 120) and a second smooth skin (14; 140) in order to obtain channels (16; 160), each channel being delimited by a corrugation of the first skin and the second smooth skin, so as to form the structural surface heat exchanger of a ruled or skew final shape, in which a fluid (F1) is intended to circulate in the channels, and air (F2) is intended to circulate in contact with the second smooth skin, the method including:
- a step of forming cavities (50, 500) in the first skin simultaneously with the step of forming (E1, E'1) the first skin, or in the second skin prior to the step of shaping the second skin or assembling the first corrugated skin on the second skin, to obtain fluid distributors and collectors when assembling the first and second skins, said step of forming cavities (50, 500) preferably being carried out in a press or by machining in the mass of the first or second skin, or
- a step of assembling cavities (50') on the first corrugated skin, prior to the step of assembling the first corrugated skin on the second smooth skin, to form fluid distributors and collectors when assembling the first and second skins by welding,
a fluid distributor being a cavity for distributing the fluid at the inlet of the channels, and a fluid collector being a cavity for collecting the fluid at the outlet of the channels

2. The manufacturing method according to claim 1, wherein the step of assembling (E4; E'2) the first (12; 120") and second (14; 140') skins is carried out by friction stir welding preferably according to the following parameters:
- Use of a substantially cylindrical tool (40) including a retractable pin (42) with a diameter in the range of 2 to 5 mm and a length in the range of 1 to 5 mm so that the retractable pin penetrates into the first skin (12; 120") and in half the thickness of the second skin (14; 140'),
- Application of a contact pressure between the two skins in the range of 1 to 5 kN, thanks to a pressure device such as the substantially cylindrical tool (40),
- Clamping the two skins thanks to a movable clamping device (44),
- Rotation speed of the tool (40) in the range of 500 to 1500 rpm,
- Inclination of the tool (40) in the range of 1 to 5° with respect to a plane normal to the first and second skins, and
- Advance speed of the tool (40) in the range of 100 to 700 mm/min.

3. The manufacturing method according to claim 1, wherein the step of assembling (E4; E'2) the first (12; 120") and second (14; 140') skins is carried out by brazing, preferably according to the following parameters:
- Application of a metal strip (18) having a melting temperature in the range of 450°C to 600°C on contact areas between the two skins,
- Application of a contact pressure between the two skins in the range of 50 to 350 g/cm², and,
- Application of a heat treatment in the range of 2 to 20 hours at a temperature in the range of 120 to 220°C, so as to obtain a state T6.

4. The manufacturing method according to claim 1, wherein the step of assembling (E4; E'2) the first (12; 120") and second (14; 140') skins is carried out by laser welding, preferably according to the following parameters:
- Laser power in the range of 2000 to 4000 W,
- Laser advance speed in the range of 2 to 5 m/min,
- Focal distance between the laser and the first or second skin in the range of 300 to 500 mm,
- Inclination of the laser in the range of 3 to 7° with respect to the first and second skins,
- Direction of welding by pushing the material.

5. The manufacturing method according to any one of the preceding claims, including the following steps:
a. Forming (E1) the first skin (12') to obtain a first corrugated skin (12"),
b. Shaping (E2) the first corrugated skin (12") obtained in step a) to obtain a first corrugated skin of a ruled or skew final shape (12),
c. Shaping (E3) the second smooth skin (14') to obtain a second smooth skin of a ruled or skew final shape (14), for example by tensioning,
d. Assembling the first (12) and second (14) skins of a ruled or skew final shape obtained in steps b) and c) to obtain channels (16), each channel being delimited by a corrugation of the first skin and the second smooth skin, so as to form the structural surface heat exchanger of a ruled or skew final shape (10), in which a fluid (F1) is intended to circulate in the channels, and air (F2) is intended to circulate in contact with the second smooth skin.

6. The manufacturing method according to the preceding claim, wherein the steps b) and/or c) of shaping are carried out by tensioning.

7. The manufacturing method according to any one of claims 5 and 6, wherein the steps a) and b) of forming (E1) and shaping (E2) the first skin (12', 12") are carried out simultaneously, for example in a press.

8. The manufacturing method according to any one of claims 1 to 4, including the following steps:
a. Forming (E'1) the first skin (120') to obtain a first corrugated skin (120"), for example in a press,
b. Assembling (E'2) the first corrugated skin (120") obtained in step a) on the second smooth skin (140') to obtain channels (160), each channel being delimited by a corrugation of the first skin and the second smooth skin, so as to form a structural surface heat exchanger of a straight intermediate shape (100'),
c. Shaping (E'3) the structural surface heat exchanger of a right intermediate form (100') obtained in step b) to obtain a structural surface heat exchanger of a ruled or skew final shape (100) between a fluid (F1) intended to circulate in the channels, and air (F2) intended to circulate in contact with the second smooth skin.

9. The manufacturing method according to the preceding claim, wherein step c) of shaping (E'3) is carried out by tensioning.

10. The manufacturing method according to any one of claims 5 and 6, wherein step of assembling cavities (50') on the first corrugated skin (12", 120") is a step of assembling cavities (50') on the first corrugated skin (12", 120") obtained in step a), prior to the step of shaping (E2) the first corrugated skin (12") or prior to the step of assembling (E'2) the first corrugated skin (120") on the second smooth skin (140'), by TIG welding.

11. The manufacturing method according to any one of the preceding claims, including a step of controlling the assembling and/or shaping steps.

12. The manufacturing method according to any one of the preceding claims, wherein the first skin and/or the second skin is made of aluminum or an alloy including aluminum, preferably of the 6000 series.

13. The manufacturing method according to any one of the preceding claims, wherein the first skin has a thickness in the range of 1 to 3 mm and the second skin has a thickness in the range of 0.6 to 2 mm.
